# EUROPÄISCHE PATENTANMELDUNG

(11) **EP 4 787 865 A1**
(43) Veröffentlichungstag der Anmeldung: **05.08.2026**
(21) Anmeldenummer: 25155029.9
(22) Anmeldetag: 30.01.2025
(51) Int. Cl.: H04N 21/254, H04L 9/40, H04N 21/6334, H04N 21/8358

(54) **VERFAHREN UND SYSTEM FÜR SICHERE NUTZUNG VON DIGITALEM VIDEOCONTENT**

(71) Anmelder: Deutsche Telekom AG, 53113 Bonn (DE)
(72) Erfinder: DÖRING, Ronny, 16775 Sonnenberg (DE); GEITZ, Marc, 58089 Hagen (DE)
(74) Vertreter: Maucher Jenkins Patent- und Rechtsanwälte

(57) **Zusammenfassung**

Die Erfindung betrifft eine Lösung, welche es einem Konsumenten eines digitalisierten Videos ermöglicht, die Authentizität des Herausgebers und die Integrität der Videodaten zu überprüfen. Mittels einer Videosicherungseinrichtung des Herausgebers wird das Video in jeweils mehrere, aufeinanderfolgende Videoframes umfassende Videoblöcke unterteilt. Zu den Videoframes jedes Videoblocks wird eine Hashinformation erzeugt und mit einem privaten Schlüssel des Herausgebers signiert. In jeden Videoblock wird ein Kennzeichnungs- und Signaturframe MSF eingebettet, welcher zumindest ein ihn als MSF kenntlich machendes Kennzeichen und die Signatur der Hashinformation zum Videoblock enthält. Der Mediaplayer des wiedergebenden Endgeräts erkennt die in die Videoblöcke eingebetteten MSFs. Er speichert für den Videoblock, auf welche sich der jeweilige MSF bezieht, die enthaltene Signatur und validiert den Videoblock, indem er zu diesem mittels der auch in der Videosicherungseinrichtung verwendeten Hashfunktion eine Hashinformation erzeugt, die er mit der in dem MSF in signierter Form übermittelten Hashinformation durch Verifikation der zwischengespeicherten Signatur mit dem öffentlichen Schlüssel des Herausgebers vergleicht.

## Beschreibung

Die Erfindung betrifft eine Lösung für eine sichere Nutzung digitalen Videocontents. Als sichere Nutzung von Videocontent soll in diesem Kontext eine Nutzung angesehen werden, bei welcher es dem Konsumenten eines digitalisierten Videos ermöglicht ist, sich über die Identität des Herausgebers des Videos respektive über dessen Authentizität Klarheit zu verschaffen sowie eine Gewähr dafür zu haben das der jeweilige Videocontent im Zusammenhang mit seiner Herausgabe oder danach - nämlich bis zu seiner Wiedergabe auf einem Endgerät des Konsumenten - nicht manipuliert wurde. Insoweit bezieht sich die Erfindung auf eine technische Lösung, welche in einem weitestgehend automatisierten Ablauf die Authentizität des Herausgebers und die Integrität der Videodaten für den Konsumenten überprüfbar macht und dies überprüft. Gegenstände der Erfindung sind ein entsprechendes Verfahren und ein zur Durchführung dieses Verfahrens geeignetes System.

Bei der Nutzung digitalen Videocontents ist es für die Konsumenten entsprechender digitalisierter Videos zunehmend von Bedeutung, Sicherheit darüber zu haben, von wem ein jeweiliger Videocontent stammt und dass der betreffende Content, also der Inhalt des jeweiligen Videos, nicht manipuliert worden ist. Dies gilt insbesondere vor dem Hintergrund des zunehmenden Aufkommens generativer künstlicher Intelligenz (KI beziehungsweise AI) zur Erzeugung künstlicher Videos, aber auch im Hinblick auf neue technische Möglichkeiten zur nachträglichen Bearbeitung nach üblichen Verfahren erzeugter digitaler Videos.

Gegenwärtig stehen bereits auf künstlicher Intelligenz (KI oder englisch AI) basierende generative Video-Generierungs-Systeme zur Verfügung. Hierbei handelt es sich um technische Systeme, die in der Lage sind, Videoinhalte auf Basis von Textbeschreibungen oder anderen Eingaben selbsttätig zu erstellen. Diese Systeme nutzen fortschrittliche Machine-Learning-Modelle, insbesondere Deep-Learning-Algorithmen wie GANs (Generative Adversarial Networks) oder Diffusion-Modelle, um realistische oder kreative Szenarien zu erzeugen. Entsprechende Technologien bieten immense Möglichkeiten in Bereichen wie Filmproduktion, Werbung, Design und Gaming, da sie den Prozess der Videoproduktion automatisieren und beschleunigen können.

Einige bemerkenswerte Beispiele sind Runway's Gen-2, das KI-gestützte Videoclips basierend auf Text-Prompts erstellt, Pika Labs, das ähnliche Funktionen für animierte Sequenzen bietet, sowie DeepMind's Transframer, das Vorhersagen von Videosequenzen basierend auf einzelnen Bildern ermöglicht. Solche Tools revolutionieren die Art und Weise, wie Inhalte erstellt werden. Sie ermöglichen es, komplexe visuelle Projekte mit minimalem menschlichem Eingriff zu realisieren.

Sora ist ein weiteres Beispiel für eine generative Video-KI, die zunehmend Aufmerksamkeit erlangt. Es bietet die Möglichkeit, qualitativ hochwertige Videos auf Grundlage von Textbeschreibungen oder spezifischen Eingaben zu erstellen. Ähnlich wie bei anderen generativen Modellen zielt Sora darauf ab, den kreativen Prozess zu vereinfachen und sowohl für professionelle als auch für kreative Anwendungen in Bereichen wie Filmproduktion, Marketing und Content Creation genutzt zu werden.

Die vorstehend beispielhaft genannten Tools zeigen eindrucksvoll das Potenzial generativer Kls, den kreativen Videoproduktionsprozess effizienter und skalierbarer zu gestalten. Alle in diesem Zusammenhang angegebenen Bezeichnungen, Produktkennzeichen oder Namen sind gegebenenfalls eingetragene Marken oder Firmennamen ihrer jeweiligen Inhaber.

Die zuvor beschriebenen Entwicklungen bieten, wie bereits ausgeführt, große Chancen im kreativen Prozess der Erstellung in digitaler Form verbreiteter Filme respektive Videos. Gleichzeitig ist jedoch ein Missbrauch der insoweit zur Verfügung stehenden Techniken nicht auszuschließen und auch bereits in einigen Fällen beobachtet worden. Zu denken ist hierbei zum Beispiel auch an sogenannte Deepfakes, bei welchen derartige oder vergleichbare Techniken dazu verwendet werden, Film- respektive Videomaterial in einer Weise zu verändern, dass dieses dem unbefangenen Betrachter überhaupt nicht auffällt.

Hierbei ist es beispielsweise möglich, Videos zu erstellen, in denen sich bekannte Persönlichkeiten, zum Beispiel aus der Politik, scheinbar in einer völlig unerwarteten Weise zu beliebigen Sachverhalten äußern. Es ist dabei möglich, den betreffenden Personen, ohne dass dies bei der Wiedergabe eines entsprechenden Videos auffallen würde, Worte gewissermaßen "in den Mund zu legen", die so von ihnen tatsächlich nie geäußert wurden. Auch können unabhängig von einem Bezug auf bekannte Personen, sehr realistische Videoszenen zu Geschehnissen erzeugt werden, die es so in der Realität überhaupt nicht gegeben hat. Hierdurch ist es möglich, gezielt Falschinformationen zu verbreiten und größere Menschengruppen zu täuschen, was enorme Risiken mit sich bringt. Es liegt auf der Hand, dass solchermaßen auch in einem nennenswerten Umfang die politische Meinung innerhalb einer Gesellschaft mit unredlichen Absichten beeinflusst werden kann. Daher ist es wünschenswert, dass es einem jeweiligen Konsumenten möglich ist, sich zuverlässig darüber zu vergewissern, wer der Herausgeber eines jeweiligen Videos ist und dass dessen Inhalte nicht manipuliert wurden.

Die Bereitstellung einer dafür geeigneten, effizienten technischen Lösung ist die Aufgabe der vorliegenden Erfindung. Hierfür sollen ein entsprechendes Verfahren und ein zu dessen Durchführung geeignetes System angegeben werden.

Um die Herkunft eines Videos zu verifizieren, kommen heute sogenannte Fingerprints zum Einsatz. Diese Fingerprints sind digitale Erkennungsmerkmale, die auf den Eigenschaften der Datei basieren, wie beispielsweise dem verwendeten Kamerasensor, der Belichtung oder dem verwendete Codec. Sie ermöglichen es, ein Video einem bestimmten Gerät zuzuordnen, ähnlich einem Fingerabdruck. Allerdings können solche Fingerprints durch technische Manipulationen oder die Neuencodierung eines Videos verfälscht oder entfernt werden, was es schwierig macht, die Authentizität bei stark bearbeiteten Inhalten zu garantieren.

Eine robustere Alternative sind digitale Signaturen auf Basis von Kryptographie. Mittlerweile gelten solche Signaturen im Rahmen von Post-Quanten-Kryptographie sogar als sicher gegenüber eventuellen zukünftigen Angriffen mit Quantencomputern. Die Signaturen werden mittels privater und öffentlicher Schlüssel erstellt und bieten eine weitaus höhere Sicherheit und Verlässlichkeit. Bei der Aufnahme eines Videos wird dieses mit einem privaten Schlüssel des Geräts, der Kamera, des TV-Senders, des Livestreamers oder des Filmstudios signiert. Jede Änderung an den Videodaten würde die digitale Signatur ungültig machen, wodurch Manipulationen sofort erkannt werden könnten. Die Authentizität und Integrität des Videos können dann durch den öffentlichen Schlüssel des Verfassers oder Geräts überprüft werden, was eine eindeutige Verifikation des ursprünglichen Urhebers ermöglicht. Kryptographische Signaturen bieten somit eine zuverlässigere Methode, die Echtheit eines Videos zu gewährleisten, im Gegensatz zu den eher angreifbaren Fingerprints.

Allerdings könnte sich der Einsatz kryptographischer Signaturen bei Broadcast-Videos oder Livestreams als schwierig erweisen. Es wäre hierbei erforderlich, große Datenmenge zu signieren, was hohe Rechenkapazitäten erfordert, wodurch sich die Latenz des kontinuierlich und eigentlich in Echtzeit übertragenen Streams signifikant erhöhen könnte.

Die vor diesem Hintergrund bestehende, weiter oben formuliertes Aufgabe wird durch ein alternatives Verfahren mit den Merkmalen des Patentanspruchs 1 gelöst. Ein die Aufgabe lösendes und zur Durchführung dieses Verfahrens geeignetes System wird durch den ersten Sachanspruch charakterisiert.

Der gestellten Aufgabe folgend, wird es dem Konsumenten eines digitalen Videos mit Hilfe des vorgeschlagenen Verfahrens ermöglicht, mittels eines von ihm für die Wiedergabe des betreffenden Videos auf einem Endgerät genutzten Mediaplayers die Authentizität des Herausgebers und die Integrität der Videodaten des wiedergegebenen Videos zu überprüfen.

Gemäß dem Verfahren wird dazu vor einer Verbreitung des Videos mittels einer dafür ausgebildeten Videosicherungseinrichtung (im Weiteren auch VSE) des Herausgebers das Video zunächst in Videoblöcke unterteilt, welche jeweils mehrere, aufeinanderfolgende Videoframes umfassen. Für die gebildeten Videoblöcke wird durch ein, mittels einer auch in dem zur späteren Wiedergabe des Videos genutzten Mediaplayer zum Einsatz kommenden Hashfunktion erfolgendes Hashing ihrer jeweiligen Frames eine Hashinformation erzeugt. Diese Hashinformation wird dann unter Erzeugung einer kryptographischen Signatur mit einem privaten Schlüssel des Herausgebers signiert.

Schließlich wird in jeden Videoblock ein sich auf den jeweiligen Videoblock beziehender Kennzeichnungs- und Signaturframe (marker + signature frame, im Weiteren auch MSF) eingebettet. Dieser MSF, bezüglich welchem zu den Möglichkeiten seiner Einbettung in einen jeweiligen Videoblock später noch nähere Erläuterungen gegeben werden sollen, enthält zumindest ein ihn als MSF kenntlich machendes Kennzeichen und die vorgenannte kryptographische Signatur der zu dem jeweiligen Videoblock erzeugten Hashinformation.

Als Hashfunktion für das zuvor angesprochene Hashing kann beispielsweise SHA256 zum Einsatz kommen. Die jeweils erzeugte Hashinformation kann in verschiedenen Darstellungen signiert werden, etwa in Form roher Bytes oder Base64-codierter Zeichenketten. Die genaue Darstellung muss jedoch, ebenso wie die zum Einsatz gelangende Hashfunktion zwischen dem Herausgeber und dem Konsumenten respektive dem Bereitsteller des Mediaplayers abgestimmt und im marker + signature frame MSF festgelegt werden.

Weiterhin ist das Verfahren so gestaltet, dass der Mediaplayer des das Video wiedergebenden Endgeräts des Konsumenten signierte Videos anhand der in diesen enthaltenen marker + signature frames MSFs erkennt. Konkret erkennt der Mediaplayer die in den einzelnen Blöcken eingebetteten MSFs an dem sie als solche erkennbar machenden Kennzeichen. Stößt er in einem Videoframe auf ein entsprechendes Kennzeichen, so speichert er zunächst die in diesem Frame (MSF) enthaltene kryptographische Signatur in einem Zwischenspeicher ab. Ferner validiert er dann den Videoblock, auf welchen sich der betreffende respektive der jeweilige MSF bezieht, im Hinblick auf die Authentizität des Herausgebers und die Integrität der Videodaten.

Letzteres erfolgt, indem der Videoplayer zu den Frames des betreffenden Videoblocks durch Hashing mittels der auch in der VSE des Herausgebers verwendeten Hashfunktion eine Hashinformation erzeugt und diese mit der in dem MSF in signierter Form übermittelten Hashinformation durch Verifikation der zwischengespeicherten kryptographischen Signatur mit dem öffentlichen Schlüssel des Herausgebers vergleicht.

Andernfalls - die beiden miteinander verglichenen Hashinformationen sind nicht identisch - wird vorzugsweise durch den Mediaplayer an dem zur Wiedergabe des Videos genutzten Display (ein Display, welches Bestandteil des auch den Mediaplayer bereitstellenden Endgeräts des Videokonsumenten ist oder mit diesem Endgerät interagiert) eine entsprechende Warnmeldung angezeigt, wonach der Herausgeber des Videos nicht verifiziert werden kann oder der Videocontent möglicherweise manipuliert wurde. Je nach Implementierung des Verfahrens kann außerdem oder stattdessen auch die Wiedergabe des Videos gestoppt werden.

Selbstverständlich erfolgt die zuvor angesprochene Verifikation der zwischengespeicherten kryptographischen Signatur mit der in dem MSF in signierter Form übermittelten Hashinformation entsprechend dem in der Videosicherungseinrichtung für das Signieren der Hashinformation eines jeweiligen Videoblocks verwendeten Signaturverfahren. Lediglich beispielhaft seien insoweit das RSA-Signaturverfahren und das Signaturverfahren nach Elgamal als hierfür in Betracht kommende Verfahren genannt. Während bei Anwendung des RSA-Signaturverfahrens im Zuge der Verifikation durch den Mediaplayer aus der mit dem MSF übermittelten kryptographischen Signatur die ursprüngliche durch die Videosicherungseinrichtung zu dem Videoblock erzeugte Hashinformation unter Einsatz des öffentlichen Schlüssels des Herausgebers rekonstruiert wird, um sie mit der von dem Mediaplayer seinerseits zu dem Videoblock gebildeten Hashinformation vergleichen zu können, ist dies bei einer Anwendung des Verfahrens nach Elgamal nicht der Fall. Hierbei können die beiden in Rede stehenden Hashinformationen bei der Abarbeitung des Signaturalgorithmus durch den Mediaplayer (unter Einsatz des öffentlichen Schlüssels des Herausgebers) miteinander verglichen werden, ohne dass es dabei einer Rekonstruktion der ursprünglich durch die Videosicherungseinrichtung erzeugten Hashinformation bedarf.

Das Signieren der Hashinformation eines jeweiligen Videoblocks und die in damit korrespondierender Weise durch den Mediaplayer erfolgende Überprüfung der Signatur können beispielsweise auch unter Anwendung eines PQC-Verfahrens, nach einem Verfahren der Post-Quanten-Kryptographie, wie zum Beispiel Dilithium, erfolgen.

Der öffentliche, durch den Mediaplayer zur Verifizierung verwendete Schlüssel des Herausgebers kann beispielsweise mit dem MSF an den Mediaplayer übermittelt werden und durch diesen zur Durchführung des Verifikationsvorgangs aus dem MSF extrahiert werden. Eine alternative Möglichkeit besteht darin, dass der öffentliche Schlüssel durch den Mediaplayer für den Einsatz zur Verifizierung von einer Website heruntergeladen wird, deren Adresse mit dem MSF übermittelt und durch den Mediaplayer zum Download des Schlüssels aus dem MSF extrahiert wird.

Durch die, gemäß dem zuvor in seiner grundsätzlichen Ausprägung beschriebenen Verfahren, dem Vorgang der Signaturerzeugung vorausgehende Blockbildung mit anschließendem Hashing der Frames des jeweiligen Videoblocks können der Rechenaufwand und die Rechenzeit für das Signieren signifikant verringert werden. Insbesondere hierdurch bietet sich dieses Verfahren als Alternative zur Lösung der eingangs angesprochen Probleme an.

In dem schon mehrfach angesprochenen MSF werden das diesen als solchen identifizierende Kennzeichen sowie die Signatur der Hashinformation des zugehörigen Videoblocks vorzugsweise an dafür festgelegten Pixelpositionen in den MSF eingebettet. Entsprechendes gilt für weitere vorstehend genannte, in dem MSF enthaltene Informationen (öffentlicher Schlüssel des Herausgebers oder Webadresse, insbesondere zum Download des öffentlichen Schlüssels des Herausgebers) oder weitere, später noch angesprochene, eventuell zusätzlich in den MFS aufgenommene Informationen. Hierbei können die Pixel an den das Kennzeichen des MSF kodierenden Pixelpositionen in definierter Weise eingefärbt werden. Zum Beispiel wird das Pixel mit der Pixelposition x1, y5 stets auf Schwarz gesetzt und gleichzeitig das Pixel mit der Pixelposition x4, y256 als weißes Pixel ausgegeben. Erkennt der Mediaplayer des zur Wiedergabe genutzten Endgeräts diese spezielle Pixel(-farb)-kombination, so verfügt dieser, gemäß einem zur Umsetzung des Verfahrens festzulegenden Protokoll, über die Information, dass es sich bei dem untersuchten Frame um einen MSF handelt und dass sich innerhalb dieses MSF an ebenfalls definierter Position die von ihm einzulesende und zwischenzuspeichernde Signatur der Hashinformation befindet.

Entsprechend einer bevorzugten Ausgestaltung des Verfahrens erfolgt das durch die Videosicherungseinrichtung des Herausgebers durchgeführte Hashing der Frames eines jeweiligen Videoblocks, indem zunächst ein Hashwert für jeden einzelnen Frame des betreffenden Videoblocks gebildet wird und dann die Hashwerte der Frames miteinander verkettet (im einfachsten Fall und vorzugsweise einfach aneinandergefügt) werden sowie schließlich die hierbei entstehende Zeichenkette unter Erzeugung der Hashinformation für den Videoblock abermals gehasht wird. In analoger Weise verfährt der Mediaplayer des das Video wiedergebenden Endgeräts bei der Erzeugung der Hashinformation für einen jeweiligen, durch den eingebetteten MSF definierten Videoblock, welche mit der in dem MSF enthaltenen Hashinformation zu vergleichen ist.

Alternativ wäre es auch möglich, lediglich die einzelnen Frames zu hashen und unmittelbar die dabei entstehenden aneinandergereihten Hashwerte zu signieren. Durch die zuvor dargestellte vorzugsweise Verfahrensgestaltung mit einem abermaligen Hashing der aneinandergereihten (verketteten) Hashwerte der einzelnen Frames wird jedoch vorteilhafterweise der zu erzeugenden Signatur eine noch kürzere Zeichenkette (der finale Hashwert) zugrunde gelegt. Dies ermöglicht eine weitere Reduzierung der Rechenzeit bei der Verarbeitung des zum Einsatz kommenden Signaturalgorithmus.

Wie bereits weiter oben angesprochen, sind auch zur Art und Weise der Einbettung des marker + signature frames (MSF) grundsätzlich unterschiedliche Vorgehensweisen denkbar. So kann ein jeweiliger MSF beispielsweise dem Videoblock, auf welchen er sich bezieht, als ein zusätzlicher Frame hinzugefügt werden. Bei einem Video mit einer Bildwiedergaberate von 60 Frames pro Sekunde (60 fps) könnten beispielsweise durch die VSE des Herausgebers des Videos Videoblöcke gebildet werden, welche jeweils 59 Frames und zusätzlich den MSF umfassen. Durch den Konsumenten, also den Betrachter eines entsprechenden Videos, würde der zusätzlich eingefügte MSF aus rein visueller Sicht im Grunde gar nicht auffallen.

Allerdings käme es hierbei mit zunehmender Laufzeit des Films respektive des Videos zu einer immer größer werdenden Verschiebung zwischen der Bild- und der Tonspur. Um dies zu vermeiden, erfolgt die Einbettung des MSF in den jeweiligen zugehörigen Videoblock vorzugsweise dadurch, dass der erzeugte, zumindest das ihn entsprechend charakterisierende Kennzeichen sowie die Signatur der Hashinformation des Videoblocks aufnehmende MSF dem ersten Frame des Videoblocks überlagert wird. Zwar wird dessen bildlicher Inhalt aufgrund der Überlagerung geringfügig verfälscht, jedoch handelt es sich hierbei um eine Änderung, die durch den Betrachter nicht wahrnehmbar, wohl aber durch den zur Wiedergabe des Videos verwendeten Mediaplayer auswertbar ist.

Das zuvor beschriebene Verfahren eignet sich insbesondere für die Verbreitung über ein Netzwerk zu übertragener Videostreams. Es ermöglicht dabei eine Übertragung entsprechender Videostreams in nahezu Echtzeit. Gewährleistet wird dies durch das Hashing der Frames eines jeweiligen Videoblocks unter Erzeugung der diesen, vergleichbar einem Fingerabdruck, kennzeichnenden Hashinformation. Die Ausführung dazu geeigneter (grundsätzlich bereits bekannter) Hashfunktionen erfordert vergleichsweise geringe Rechenzeiten und verursacht folglich nur geringste Verzögerungen.

Die Signatur der im Vergleich zur Gesamtgröße eines jeweiligen Videoblocks nur sehr kurzen Hashinformation kann dann mit geeigneten Verfahren ebenfalls hoch performant ohne das Entstehen größerer Verzögerungen ausgeführt werden. Zur Erzeugung der Signatur kommen vorzugsweise unter Nutzung post-quantumkryptographischer Techniken (PQ) ausgeführte Public-Key-Verfahren zum Einsatz. Zu denken ist hierbei beispielsweise an "Dilithium". Es ist darauf hinzuweisen, dass das Verfahren in seiner zuvor dargestellten Form nur für unkomprimierte oder für verlustfrei komprimierte Videostreams einsetzbar. Zur Verringerung der zu übertragenden Datenmenge kann ein nach dem Verfahren behandelter Videostream dann andererseits selbst unter Verwendung eines verlustfreien Komprimierungsverfahrens komprimiert werden.

Das Videostream wird über das Netzwerk ähnlich wie auch sonst üblich übertragen, jedoch blockweise. Die Videoblöcke können unabhängig von ihrer ursprünglichen Reihenfolge im Video übertragen werden. Der Mediaplayer beim Empfänger/Konsumenten des Videos setzt das Video in der richtigen Reihenfolge wieder zusammen. Hierbei wird jedoch die Verwendung eines paketverlustfreien Streamingprotokolls vorausgesetzt, beispielsweise Media over QUIC unter Verwendung von Forward Error Correction (FEC).

Wie bereits mehrfach ausgeführt, enthält ein jeweiliger MSF, vorzugsweise jeweils an festen Positionen innerhalb des MSF, zumindest das ihn als solches kenntlich machende Kennzeichen sowie die elektronische Signatur der Hashinformation des zugehörigen Videoblocks sowie ferner, den öffentlichen Schlüssel des Video-Herausgebers oder eine Webadresse für dessen Download. Darüber hinaus kann der MSF aber auch noch weitere, dann vorzugsweise ebenfalls an fester Position innerhalb des MSF positionierte Daten umfassen. Entsprechendes kann beispielsweise notwendig sein, wenn je nach Implementierung des Verfahrens unterschiedliche Größen von jeweils mit einem MSF versehenen Videoblöcken verwendet werden. Der jeweilige MSF enthält dann zusätzlich eine Information über die Blockgröße, das heißt über die Anzahl der aufeinanderfolgenden Frames, auf die er sich bezieht.

Ferner können durch die Videosicherungseinrichtung in einen jeweiligen MSF Daten aufgenommen werden, welche eine Website zur Überprüfung des öffentlichen Schlüssels des Herausgebers adressieren. Gegebenenfalls, nämlich dann, wenn der für die Verifikation der zwischengespeicherten Signatur erforderliche öffentliche Schlüssel nicht mit den MSF übertragen, sondern durch den Mediaplayer von einer Website heruntergeladen wird, kann es sich aber bei diesen Adressdaten um ohnehin schon in dem MSF enthaltene Daten handeln. Bei einer im MSF enthaltenen Adresse für eine Website zur Überprüfung des öffentlichen Schlüssels handelt es sich daher typischerweise nur dann um zusätzlich in den MSF aufgenommene Daten, wenn der öffentliche Schlüssel bereits mit dem MSF übermittelt und nicht von einer Website heruntergeladen wird. Vorsorglich sei aber auch darauf hingewiesen, dass es sich bei der Adresse für die Website zum Download des öffentlichen Schlüssels einerseits und bei der Adresse zu einer Website zu dessen Überprüfung andererseits nicht zwingend um dieselbe Adresse handeln muss.

Der insoweit vorzugsweise verwendete Uniform Resource Locator URL der mit dem MSF zur Überprüfung des öffentlichen Schlüssels des Herausgebers adressierten Website wird hierbei durch den Mediaplayer vorzugsweise als Overlay zu durch ihn auf einem von dem Endgerät für die Wiedergabe des Videos genutzten Display visualisierten Wiedergabe-Steuerelementen angezeigt. Hierdurch wird dem Konsumenten eine Prüfung auf das Bestehen einer Plausibilität zwischen der adressierten Website und dem durch das Video vermittelten Content ermöglicht wird. Sieht sich also beispielsweise der Nutzer/Konsument ein Video mit einer Rede des amerikanischen Präsidenten an, so ist es sicherlich plausibel, wenn der die Website zur Überprüfung des öffentlichen Schlüssel adressierende URL eine Website des Weißen Hauses adressiert.

Aus der bisherigen Beschreibung der vorgeschlagenen Lösung wird sicherlich deutlich, dass es sich hierbei um eine weitgehend automatisierte technische Lösung handelt, aber der Nutzer/Konsument nicht vollends davon befreit wird, übliche Überlegungen zur Plausibilität des ihm zur Nutzung angebotenen Videomaterials anzustellen. Vorzugsweise wobei wird er, wie ersichtlich, auch hierbei durch die vorgestellte Lösung (nämlich durch die im MSF übermittelte Website-Adresse) unterstützt wird.

Eine zusätzliche Unterstützung kann der Konsument dabei noch dadurch erhalten, dass auf der mit dem MSF adressierten Website ein durch den Herausgeber des Videos zu seinem öffentlichen Schlüssel erzeugter Fingerprint veröffentlicht wird. Bei einer entsprechenden Verfahrensgestaltung wird durch den Mediaplayer nach derselben zur Erzeugung dieses Fingerprints verwendeten Vorschrift ein Fingerprint des von dem Mediaplayer bei der Validierung eines jeweiligen Videoblocks verwendeten öffentlichen Schlüssels erzeugt und auf dem Display zusätzlich (zur URL der Website) als Overlay zu den Wiedergabe-Steuerelementen angezeigt. Der Konsument kann dabei den vom Mediaplayer erzeugten Fingerprint mit dem auf der durch den MSF adressierten Website veröffentlichten Fingerprint vergleichen.

Gemäß der zuletzt beschriebenen Verfahrensgestaltung kann der als Overlay zu den auf dem Display visualisierten Wiedergabe-Steuerelementen ausgegebene URL auch in Form eines QR-Codes ausgegeben werden. Diesen QR-Code kann der Nutzer/Konsument des Videos mittels eines (anderen) dafür ausgebildeten Endgeräts scannen, um den vom Mediaplayer zum öffentlichen Schlüssel des Herausgebers ermittelten Fingerprint zu überprüfen.

Schließlich kann der MSF auch noch Metadaten mit Informationen zum Video/Film enthalten. Hierbei kann es der Mediaplayer dem Konsumenten vorteilhafterweise ermöglichen, diese Informationen durch Auswahl entsprechender dafür durch den Mediaplayer bereitgestellter Menüpunkte auf dem zur Wiedergabe des Videos dienenden Display zu lesen.

Betreffend die Möglichkeiten, dem Mediaplayer den öffentlichen Schlüssel des Herausgebers eines jeweiligen Videos bekannt zu machen und die Beurteilung seiner Seriosität sowie der der Quelle des Videos durch einen Konsumenten/Nutzer unter Verwendung einer dies ermöglichenden Website lassen sich beispielhaft folgende Szenarien angeben.

### Variante A:

- Der Herausgeber veröffentlicht seinen öffentlichen Schlüssel und dessen Fingerprint auf der eigenen Webseite.
- Der öffentliche Schlüssel des Herausgebers und dessen Website-Adresse werden zusätzlich zur Signatur in den MSF eingebettet.
- Der Mediaplayer überprüft die Signatur eines jeweiligen Videoblocks mit dem aus dem MSF entnommenen öffentlichen Schlüssel des Herausgebers.
- Sofern die Überprüfung erfolgreich ist, wird die Wiedergabe des Videos fortgesetzt, anderenfalls wird auf dem für die Wiedergabe verwendeten Display eine Warnmeldung herausgegeben.
- Der Mediaplayer bildet einen Fingerprint des öffentlichen Schlüssels aus dem MSF.
- Der Mediaplayer zeigt diesen Fingerprint als Overlay, das heißt als Ergänzung zu von ihm auf dem Display visualisierten Wiedergabe-Steuerelementen, wie Play, Pause, Weiter, an.
- Der Konsument/Nutzer gleicht den vom Player generierten Fingerprint mit dem Fingerprint auf der Webseite ab. Er prüft ob Plausibilität zwischen der Website (deren URL) einerseits und dem dargebotenen Inhalt andererseits besteht. Eine Übereinstimmung des durch den Mediaplayer gebildeten und als Overlay ausgegebenen Fingerprints des öffentlichen Schlüssels mit dem auf der Website dargebotenen Fingerprint verschafft ihm hierbei zusätzliche Sicherheit.
   Hierbei könnte der Abgleich des Fingerprints auch automatisiert werden, indem der Herausgeber ein Application Programming Interface (API) zur Übertragung des Fingerprints seines öffentlichen Schlüssels anbietet. Über dieses API könnte sich der Mediaplayer den Fingerprint holen und der Konsument/Nutzer müsste/sollte noch die Webseite des Herausgebers und den Videocontent auf eine zwischen ihnen bestehende Plausibilität abgleichen. Besteht diese Plausibilität aus seiner Sicht nicht, kann er sich entschließen, die Wiedergabe des Videos nicht fortzusetzen. Zumindest aber ist er gewarnt, dass dessen Inhalte fragwürdig sein könnten.

### Variante B:

- Der Herausgeber veröffentlicht ein Zertifikat (dieses enthält seinen öffentlichen Schlüssel), welches durch eine Root-Zertifizierungsinstanz legitimiert wurde auf seiner Webseite (oder einer Subdomain, zum Beispiel video.example.org). Dieses Zertifikat muss die Erweiterung "Schlüsselverwendung: Digitale Signaturen aufweisen".
- Die Adresse dieser Webseite wird zusätzlich zur Signatur in den MSF eingebettet.
- Der Mediaplayer überprüft die Signatur mit dem öffentlichen Schlüssel, den er von der im MSF adressierten Webseite herunterlädt.
- Der Mediaplayer oder das Betriebssystem des diesen ausführenden Endgeräts des Konsumenten umfasst fest hinterlegte Root-Zertifikate denen vertraut wird.
- Bei der Überprüfung wird die Zertifikatskette Root CA -> Intermediate CA -> Zertifikat (Client-Applikation = Certification Authority) durchlaufen.
- Sofern die Überprüfung erfolgreich ist, wird die Wiedergabe des Videos fortgesetzt, anderenfalls wird auf dem für die Wiedergabe verwendeten Display eine Warnmeldung herausgegeben.
- Der Mediaplayer zeigt die Adresse der Webseite des Herausgebers (auf welcher das Zertifikat veröffentlicht ist) als Overlay, das heißt als Ergänzung zu auf dem Display visualisierten Wiedergabe-Steuerelementen, wie Play, Pause, Weiter, an.
- Der Konsument/Nutzer prüft ob Plausibilität zwischen der Website (deren URL) einerseits und dem dargebotenen Inhalt andererseits besteht. Besteht diese Plausibilität aus seiner Sicht nicht, kann er sich entschließen, die Wiedergabe des Videos nicht fortzusetzen. Zumindest aber ist er gewarnt, dass dessen Inhalte fragwürdig sein könnten.

Das vorgestellte Verfahren hebt sich in weiterer Ausgestaltung vorzugsweise auch durch die Nutzung von quantensicheren Signaturen und einer kontinuierlichen Verifikation der Videoinhalte vom Stand der Technik ab. Mit der fortschreitenden Entwicklung von Post-Quanten-Kryptographie könnte das vorgeschlagene Verfahren eine zukunftssichere Methode bieten, die sowohl auf Livestreams als auch bei aufgezeichneten Videos anwendbar ist, ohne visuell störende Elemente einzuführen. Es ist jedoch zu beachten, dass die beschriebene Lösung respektive das Verfahren und dessen Implementierung eine entsprechende Hard- und Software seitens der Erzeuger/Herausgeber von Videos sowie eine Anpassung und Optimierung auf Endgeräten von Konsumente für deren Wiedergabe verwendeter Mediaplayer erfordert.

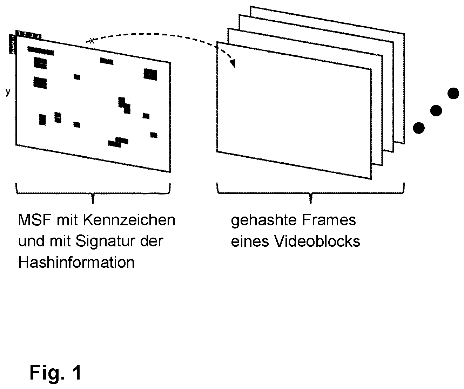

Die Fig. 1 veranschaulicht in einer Symboldarstellung die verfahrensgemäß vorgesehene Modifizierung eines aus einer Mehrzahl von Frames bestehenden Videoblocks, welcher aus der Zerlegung eines vor seiner Veröffentlichung durch einen Herausgeber in derartige Videoblöcke unterteilten Videos resultiert. Im Zusammenhang mit der zur Modifizierung eines solchen Videoblocks beschriebenen Vorgehensweise lassen sich folgende praktische Betrachtungen anstellen beziehungsweise Erwägungen treffen.

Die Pixel in einem Video können verlustfrei in verschiedenen Formaten gespeichert werden, wobei diese Formate unterschiedliche Grade an Farbtreue bieten. Beispielsweise benötigt das RGB-Format 3 Byte pro Pixel, während YUV im 4:2:2-Schema 2 Byte pro Pixel benötigt. Für ein Video mit einer Auflösung von 1920 x 1080 Pixeln ergibt dies etwa 6 MB pro Frame bei RGB und etwa 4 MB pro Frame bei YUV 4:2:2. Auf heutiger Standardhardware, wie einem Laptop, benötigt das Hashen von 5 MB Daten mittels SHA256 ca. 6 Millisekunden. Bei einer Bildrate von 60 Frames pro Sekunde summiert sich dies auf 6 ms * 60 = 360 ms. Dieser Wert liegt deutlich unter einer Sekunde und zeigt, dass die anfallenden Videodaten - je nach Definition - im Grunde in Echtzeit verarbeitet werden können.

Bei der Verwendung von Dilithium mit einem Sicherheitslevel von 2 beträgt die Größe einer Signatur 2420 Bytes. Bei einem Frame von 5 MB können so einzelne Pixel gezielt für die Signaturinformationen genutzt werden, ohne dass dies im Gesamtbild visuell auffällt, selbst wenn der marker + signature frame MSF angehalten wird. Mit mehreren Tausend möglichen Verifikationen und Signaturen pro Sekunde wäre auch die Implementierung von Dilithium in diesem Verfahren gut umsetzbar.

Ein zur Lösung der Aufgabe sowie zur Durchführung des Verfahrens geeignetes System umfasst herausgeberseitig eine Videosicherungseinrichtung VSE und auf der Seite eines Konsumenten einen, auf einem Endgerät - beispielsweise einem mobilen Endgerät - genutzten Mediaplayer, wobei die VSE und besagter Mediaplayer zur Durchführung des Verfahrens in spezieller Weise ausgebildet und/oder eingerichtet sind. Die Videosicherungseinrichtung ist dazu ausgebildet und/oder eingerichtet,
- ein zu veröffentlichendes Video in jeweils mehrere, aufeinanderfolgende Videoframes umfassende Videoblöcke zu unterteilen,
- für jeden der gebildeten Videoblöcke durch ein mittels einer Hashfunktion erfolgendes Hashing seiner Videoframes eine Hashinformation zu erzeugen,
- diese Hashinformation unter Erzeugung einer kryptographischen Signatur mit einem privaten Schlüssel des Herausgebers zu signieren,
- in jeden Videoblock einen sich auf den jeweiligen Videoblock beziehenden Kennzeichnungs- und Signaturframe MSF einzubetten, welcher zumindest ein ihn als MSF kenntlich machendes Kennzeichen und die kryptographische Signatur der zu dem Videoblock erzeugten Hashinformation enthält.

Der Mediaplayer des das Video wiedergebenden Endgeräts des Konsumenten ist dazu ausgebildet und/oder eingerichtet,
- die in die einzelnen Videoblöcke eines von ihm wiedergegebenen Videos eingebetteten MSFs an dem sie als solche kenntlich machenden Kennzeichen zu erkennen,
- die in einem jeweiligen MSF enthaltene kryptographische Signatur zwischenzuspeichern,
- die Videoframes des Videoblocks, auf welche sich der jeweilige MSF bezieht, auf die Authentizität des Herausgebers und die Integrität der Videodaten zu validieren, indem er zu Videoframes des betreffenden Videoblocks durch Hashing mittels der auch in der Videosicherungseinrichtung des Herausgebers verwendeten Hashfunktion eine Hashinformation erzeugt und diese Hashinformation durch Verifikation der zwischengespeicherten kryptographischen Signatur mittels des öffentlichen Schlüssels des Herausgebers auf Identität mit der in dem MSF in signierter Form übermittelten Hashinformation vergleicht.

Der zum System gehörende Mediaplayer ist ferner dazu ausgebildet und/oder eingerichtet das von ihm wiedergegebene Video zu stoppen und/oder auf dem zu dessen Wiedergabe verwendeten Display eine Warnmeldung auszugeben, sofern die durch ihn jeweils miteinander verglichenen Hashinformationen - die mit dem MSF zu den Frames eines Videoblocks übermittelte Hashinformation einerseits sowie die durch den Player zu dem jeweils selben Videoblock respektive zu dessen Frames erzeugte Hashinformation andererseits - nicht identisch sind.

Bei einem für die Übertragung von Videostreams über ein Netzwerk, wie beispielsweise ein Glasfasernetz oder ein Mobilfunknetz, ausgelegten System umfasst die grundsätzlich wie vorstehend beschrieben ausgebildete Videosicherungseinrichtung VSE zusätzlich eine Sendeeinrichtung zur Aussendung von Videostreams. Oder aber, die VSE ist zur Interaktion mit einer solchen Sendeeinrichtung ausgebildet oder Teil einer entsprechenden Sendeeinrichtung des Herausgebers. Ferner weist das mit dem Mediaplayer zur Wiedergabe der in Videoblöcke unterteilten Videos ausgestattete Endgerät eine Empfangseinrichtung für den Empfang über das Netzwerk übertragener Videostreams auf. Ein als Stream über das Netzwerk übertragenes Video wird dabei wie ein gewöhnlicher Videostream übertragen.

Für die vorgestellte Erfindung lassen sich beispielhaft folgende mögliche Einsatzszenarien angeben.
A. Sicherheitsüberwachung und Übertragung von sensiblen Inhalten:
   - Echtzeitüberwachung in Bereichen wie Flughäfen, Banken oder Regierungsgebäuden, bei der es wichtig ist, die Authentizität und die Integrität der Videodaten zu garantieren. Überwachungskameras können ihre Videodaten mittels einer von ihnen umfassten oder aber mit ihnen zusammenwirkenden Videosicherungseinrichtung VSE kontinuierlich signieren, sodass Behörden oder Sicherheitspersonal sicher sein können, dass das Videomaterial nicht manipuliert wurde.
   - In Notfallsituationen, zum Beispiel bei Terroranschlägen oder Naturkatastrophen, könnten authentifizierte Live-Streams übermittelt werden, um Fehlinformationen zu vermeiden und die korrekte Koordinierung von Rettungskräften zu gewährleisten.
B. Journalismus und Nachrichtenübertragung:
   - Livestreams von Journalisten in Krisengebieten oder bei Protesten, die von vertrauenswürdigen Organisationen signiert werden, um die Authentizität des Materials zu gewährleisten und den Konsumenten eine verlässliche Quelle zu bieten.
   - Nachrichtensender könnten ihre Live-Berichterstattung signieren, um Manipulationen zu verhindern und den Konsumenten die Möglichkeit zu geben, die Echtheit der übertragenen Informationen zu überprüfen.
C. Wissenschaftliche Experimente und Laborkameras:
   - Remote-Übertragung von Experimenten oder Live-Streams aus wissenschaftlichen Einrichtungen. Hierbei könnte es notwendig sein, den Empfängern zu garantieren, dass die Videoaufnahmen authentisch sind und keine Manipulationen oder Veränderungen im Bildmaterial vorgenommen wurden, um die Integrität der Forschung zu wahren.
D. Gerichtsverwertbare Beweismittel:
   - Live-Streams oder Aufzeichnungen, die als Beweismittel in Gerichtsverfahren dienen, können entsprechend der beschriebenen Lösung signiert werden. Dadurch wird sichergestellt, dass keine nachträgliche Veränderung des Videomaterials möglich ist, was die Integrität von Beweismitteln stärkt.
   - Zudem könnten Videos von Dashcams oder Körperkameras von Polizeieinsätzen entsprechend signiert werden, um sicherzustellen, dass die Aufnahmen unverändert sind und für Gerichtsverfahren genutzt werden können.
E. Gaming- und eSports-Streams:
   - In der eSports-Szene könnte das Verfahren genutzt werden, um die Echtheit von Live-Gameplay-Streams zu garantieren und Betrug, zum Beispiel durch den Einsatz unlauterer Software oder anderer Manipulationstechniken, zu verhindern. Fans und Veranstalter könnten sicher sein, dass die Streams authentisch und unverfälscht sind.
   - In kompetitiven Online-Spielen könnten Match-Streams signiert werden, um sicherzustellen, dass die Aufnahmen von Turnieren oder besonderen Ereignissen unverändert bleiben.
F. Medizinische Live-Übertragungen:
   - Bei Live-Übertragungen von Operationen oder medizinischen Eingriffen können Ärzte und Spezialisten signierte Streams verwenden, um sicherzustellen, dass die Videos nicht manipuliert werden. Dies könnte insbesondere bei telemedizinischen Konsultationen oder bei der Ausbildung von Medizinern nützlich sein.
G. Live-Events und virtuelle Konferenzen:
   - Signierte Live-Übertragungen von Konferenzen, Konzerten oder anderen Events ermöglichen es Veranstaltern, den Teilnehmern die Authentizität der Streams zu garantieren und sicherzustellen, dass keine manipulierten Versionen von Videos der Veranstaltung im Umlauf sind.
   - Auch bei Wahlen oder politischen Debatten könnten signierte Livestreams verwendet werden, um zu verhindern, dass verfälschte oder manipulierte Aufnahmen verbreitet werden.

Darüber hinaus soll an dieser Stelle noch folgendes mögliches Einsatzbeispiel gegeben werden. Im Fernsehen läuft die Ansprache des amerikanischen Präsidenten. In der Benutzeroberfläche des TV wird das Video wie gewohnt abgespielt. Wenn alles in Ordnung ist und die kryptographische Signatur des Videos als authentisch verifiziert wurde, bleibt der Player im normalen Modus - das Bild sieht aus wie immer, ohne Auffälligkeiten. Sollte jedoch eine Manipulation festgestellt werden, beispielsweise wenn die Signatur einer Gruppe von Frames nicht mit dem Original übereinstimmt, erscheint sofort ein roter Rahmen um den Videoplayer. Gleichzeitig blinkt ein Alarm-Symbol und unter dem Video wird eine Warnmeldung angezeigt, die besagt, dass die Signatur nicht übereinstimmt. Eine Handlungsanweisung als Link in Form eines QR-Codes führt den Nutzer auf eine Seite, die den öffentlichen Schlüssel des Herausgebers enthält und auf mögliche Sicherheitsprobleme hinweist. Die Handlungsempfehlung könnte sein, das Video zu stoppen und eine andere, verifizierte Quelle zu suchen.

Zum Verhalten der beschriebenen Lösung bei Angriffen auf gemäß dieser gesicherte Videos können im Hinblick auf derzeit bekannte und gebräuchliche Angriffsszenarien folgende Überlegungen vorgetragen werden.

Man-in-the-Middle (MITM) Angriff: Bei einem MITM-Angriff versucht der Angreifer, die Kommunikation zwischen dem Herausgeber und dem Empfänger zu unterbrechen oder zu verändern, um falsche Informationen einzuschleusen. Da das beschriebene Verfahren jeden Videoblock mit einer kryptographischen Signatur der Hashinformation seiner Frames versieht, wird ein solcher Angriff sofort erkannt. Die Manipulation eines oder mehrerer Frames würde dazu führen, dass die durch Entschlüsselung der Signatur mit dem öffentlichen Schlüssel des Herausgebers für den empfangenen Block erhaltene Hashinformation nicht mehr mit der durch den Videoplayer im Wege des Hashings der Frames des empfangenen Videoblocks erhaltenen Hashinformation übereinstimmt. Im Videoplayer erzeugt dann eine Warnung und der Nutzer wird benachrichtigt, dass der Stream möglicherweise manipuliert wurde. Der Angriff wird also effektiv detektiert und dem Nutzer direkt mitgeteilt. Auch eine Manipulation des marker + signature frames MSF wäre sinnlos, da eine Signatur, die nicht dem erwarteten Herausgeber entspricht, durch die Verifizierung über eine Public Key Infrastructure (PKI) oder manuell über die Webseite des erwarteten Herausgebers auffallen würde.

Frame Drop (Denial of Service = DoS): Bei einem DoS-Angriff könnte der Angreifer versuchen, Frames gezielt zu blockieren oder zu unterbrechen, was zu Frame-Drop führt. Da das Verfahren auf einer kontinuierlichen Verifikation der Signaturen basiert, würde das Fehlen von Frames ebenfalls erkannt. Der Mediaplayer bemerkt, dass die erwarteten Frames nicht vollständig oder in der richtigen Reihenfolge angekommen sind, und zeigt eine Warnung an. In diesem Fall könnte eine Nachricht im Videoplayer den Hinweis geben: "Warnung: Es fehlen Datenpakete. Der Videostream könnte unvollständig oder manipuliert sein." Dies bietet dem Nutzer die Möglichkeit, das Problem zu erkennen und entsprechende Maßnahmen zu ergreifen. Ein solcher Fall könnte auch auftreten, wenn das Übertragungsprotokoll zu hohe Paketverluste aufweist, sodass die Error Correction nicht ausreicht. Allerdings gibt es keinen Weg eine schlechte Übertragung von einem gezielten Frame Drop Angriff zu unterscheiden.

Die vorgestellte Lösung, einschließlich ihrer beschriebenen Ausgestaltungen, weist insbesondere folgende Vorteile auf:
- sehr geringe visuelle Beeinträchtigung, da die Markierungen in Form von speziellen Pixeln erfolgen, die im Gesamtbild kaum auffallen, selbst wenn der Frame angehalten wird;
- quantensichere Signaturen (wie Dilithium) gewährleisten langfristige Sicherheit gegen zukünftige Quantencomputing-Bedrohungen;
- Effizienz in der Verifikation - moderne Hardware ermöglicht es, mehrere Tausend Verifikationen und Signaturen pro Sekunde durchzuführen, ohne die Abspielgeschwindigkeit des Videos zu beeinträchtigen;
- keine Beeinflussung von Bild- und Tonfluss durch vorzugsweise Überlagerung des ursprünglichen Bildinhalts mit den Metadaten und Signaturen.

## Patentansprüche

1. Verfahren für eine sichere Nutzung digitalen Videocontents, welches es einem Konsumenten eines digitalisierten Videos ermöglicht, mittels eines von ihm für die Wiedergabe dieses Videos auf einem Endgerät genutzten Mediaplayers, die Authentizität des Herausgebers und die Integrität der Videodaten des wiedergegebenen Videos zu überprüfen,
**dadurch gekennzeichnet, dass** vor einer Verbreitung des Videos mittels einer dafür ausgebildeten Videosicherungseinrichtung des Herausgebers
a.) das Video in jeweils mehrere, aufeinanderfolgende Videoframes umfassende Videoblöcke unterteilt wird,
b.) für jeden der gebildeten Videoblöcke durch ein mittels einer Hashfunktion erfolgendes Hashing der Videoframes des Videoblocks eine Hashinformation erzeugt wird,
c.) diese Hashinformation unter Erzeugung einer kryptographischen Signatur mit einem privaten Schlüssel des Herausgebers signiert wird,
d.) in jeden Videoblock ein sich auf den jeweiligen Videoblock beziehender Kennzeichnungs- und Signaturframe MSF eingebettet wird, welcher zumindest ein ihn als MSF kenntlich machendes Kennzeichen und die kryptographische Signatur der zu dem Videoblock erzeugten Hashinformation enthält,
sowie **dadurch gekennzeichnet, dass** der Mediaplayer des das Video wiedergebenden Endgeräts des Konsumenten die in die einzelnen Videoblöcke eingebetteten MSFs an dem sie als solche erkennbar machenden Kennzeichen erkennt und der Videoplayer bei jedem erkannten MSF,
e.) die in dem MSF für den Videoblock, auf welche sich der MSF bezieht, enthaltene Signatur zwischenspeichert,
f.) diesen Videoblock auf die Authentizität des Herausgebers und die Integrität der Videodaten validiert, indem er zu diesem durch Hashing seiner Videoframes mittels der auch in der Videosicherungseinrichtung des Herausgebers verwendeten Hashfunktion eine Hashinformation erzeugt und diese mit der in dem MSF in signierter Form übermittelten Hashinformation durch Verifikation der zwischengespeicherten Signatur mit dem öffentlichen Schlüssel des Herausgebers vergleicht, wobei die Identität der durch den Mediaplayer miteinander verglichenen Hashinformationen die Authentizität des Herausgebers und die Integrität der Videodaten des jeweils validierten Videoblocks bestätigt.

2. Verfahren nach Anspruch 1, **dadurch gekennzeichnet, dass** der öffentliche Schlüssel des Herausgebers mit dem MSF an den Mediaplayer übermittelt wird oder der Mediaplayer diesen Schlüssel von einer Website herunterlädt, deren Adresse mit dem MSF übermittelt wird.

3. Verfahren nach Anspruch 1 oder 2, **dadurch gekennzeichnet, dass** im Falle dessen, dass die miteinander verglichenen Hashinformationen nicht identisch sind, durch den Mediaplayer die Wiedergabe des Videos gestoppt und/oder eine auf eventuelle Probleme bezüglich der Authentizität des Herausgebers oder der Integrität der Videodaten hinweisende Warnmeldung ausgegeben wird.

4. Verfahren nach einem der Ansprüche 1 bis 3, **dadurch gekennzeichnet, dass** bei dem gemäß Schritt b.) erfolgenden Hashing der Videoframes eines jeweiligen Videoblocks zunächst ein Hashwert für jeden einzelnen Videoframe des Videoblocks gebildet wird, dann die Hashwerte der Videoframes miteinander verkettet werden und die hierbei entstehende Zeichenkette unter Erzeugung der Hashinformation für den Videoblock abermals gehasht wird und dass der Mediaplayer des das Video wiedergebenden Endgeräts des Konsumenten im Schritt g) bei der Erzeugung der zu vergleichenden Hashinformation in gleicher Weise verfährt, indem er zunächst einen Hashwert für jeden einzelnen Videoframe eines anhand seines MSF erkannten Videoblocks bildet, dann die Hashwerte der Videoframes des Videoblocks miteinander verkettet und schließlich die hierbei entstehende Zeichenkette unter Erzeugung der Hashinformation abermals hasht.

5. Verfahren nach einem der Ansprüche 1 bis 4, **dadurch gekennzeichnet, dass** das Signieren der Hashinformation eines jeweiligen Videoblocks durch die Videosicherungseinrichtung des Herausgebers unter Anwendung eines PQC-Verfahrens, das heißt nach einem Verfahren der Post-Quanten-Kryptographie erfolgt.

6. Verfahren nach einem Ansprüche 1 bis 5, **dadurch gekennzeichnet, dass** der jeweilige Kennzeichnungs- und Signaturframe MSF zur Einbettung in den Videoblock, auf welchen er sich bezieht, dem ersten wiederzugebenden Videoframe dieses Videoblocks überlagert wird.

7. Verfahren nach einem der Ansprüche 1 bis 6, **dadurch gekennzeichnet, dass** das Video als Stream über ein Netzwerk übertragen wird, welcher durch das Endgerät des Konsumenten empfangen und durch dessen Mediaplayer zur Wiedergabe seines Inhalts umgesetzt wird, wobei der entsprechende Videostream durch die Videosicherungseinrichtung des Herausgebers in Videoblöcke unterteilt sowie zu jedem dieser Videoblöcke der MSF erzeugt und in den Videoblock eingebettet wird.

8. Verfahren nach Anspruch 7, **dadurch gekennzeichnet, dass** die Videoblöcke des Streams mit dem jeweiligen darin eingebetteten MSF vor ihrer Aussendung mittels eines dazu ausgebildeten Komprimierungsverfahrens verlustfrei komprimiert werden.

9. Verfahren nach einem der Ansprüche 1 bis 8, **dadurch gekennzeichnet, dass** die Blockgröße der Videoblöcke entsprechend der Bildwiedergaberate so festgelegt wird, dass die Anzahl der von einem Videoblock umfassten Frames, einschließlich des MSF, der Anzahl der bei der Wiedergabe des Videos durch den Mediaplayer pro Sekunde wiedergegebenen Videoframes entspricht.

10. Verfahren nach einem der Ansprüche 1 bis 9, **dadurch gekennzeichnet, dass** durch die Videosicherungseinrichtung in einen jeweiligen MSF Daten aufgenommen werden, welche eine Website zur Überprüfung des öffentlichen Schlüssels des Herausgebers adressieren.

11. Verfahren nach Anspruch 10, **dadurch gekennzeichnet, dass** der Uniform Resource Locator URL der mit dem MSF adressierten Website durch den Mediaplayer als Overlay zu durch den Mediaplayer auf einem von dem Endgerät für die Wiedergabe des Videos genutzten Display visualisierten Wiedergabe-Steuerelementen angezeigt und so dem Konsumenten eine Prüfung auf das Bestehen einer Plausibilität zwischen der adressierten Website und dem durch das Video vermittelten Content ermöglicht wird.

12. Verfahren nach Anspruch 11, **dadurch gekennzeichnet, dass** auf der mit dem MSF adressierten Website ein durch den Herausgeber des Videos zu seinem öffentlichen Schlüssel erzeugter Fingerprint veröffentlicht wird und dass durch den Mediaplayer nach derselben zur Erzeugung dieses Fingerprints verwendeten Vorschrift ein Fingerprint des von dem Mediaplayer bei der Validierung eines jeweiligen Videoblocks verwendeten öffentlichen Schlüssels erzeugt und auf dem Display zusätzlich als Overlay zu den Wiedergabe-Steuerelementen angezeigt wird, so dass der Konsument den vom Mediaplayer erzeugten Fingerprint mit dem auf der durch den MSF adressierten Website veröffentlichten Fingerprint vergleichen kann.

13. Verfahren nach Anspruch 11 oder 12, **dadurch gekennzeichnet, dass** der als Overlay zu den auf dem Display visualisierten Wiedergabe-Steuerelementen ausgegebene URL als QR-Code ausgegeben wird, welchen der Konsument des Videos mittels eines dafür ausgebildeten Endgeräts scannen kann, um den vom Mediaplayer zum öffentlichen Schlüssel des Herausgebers ermittelten Fingerprint zu überprüfen.

14. Verfahren nach einem der Ansprüche 1 bis 13, **dadurch gekennzeichnet, dass** durch die Videosicherungseinrichtung in einen jeweiligen MSF zusätzlich Informationen zum Videocontent betreffende Metadaten aufgenommen werden.

15. System für eine sichere Nutzung digitalen Videocontents, welches es einem Konsumenten eines digitalisierten Videos ermöglicht, die Authentizität des Herausgebers und die Integrität der Videodaten des wiedergegebenen Videos zu überprüfen, umfassend eine Videosicherungseinrichtung des Herausgebers des Videos und einen für die Wiedergabe dieses Videos auf einem Endgerät genutzten Mediaplayer,
**dadurch gekennzeichnet, dass** die Videosicherungseinrichtung dazu ausgebildet und/oder eingerichtet ist,
- ein zu veröffentlichendes Video in jeweils mehrere, aufeinanderfolgende Videoframes umfassende Videoblöcke zu unterteilen,
- für jeden der gebildeten Videoblöcke durch ein mittels einer Hashfunktion erfolgendes Hashing der Videoframes des Videoblocks eine Hashinformation zu erzeugen,
- diese Hashinformation unter Erzeugung einer kryptographischen Signatur mit einem privaten Schlüssel des Herausgebers zu signieren,
- in jeden Videoblock einen sich auf den jeweiligen Videoblock beziehenden Kennzeichnungs- und Signaturframe MSF einzubetten, welcher zumindest ein ihn als MSF kenntlich machendes Kennzeichen und die kryptographische Signatur der zu dem Videoblock erzeugten Hashinformation enthält,
sowie **dadurch gekennzeichnet, dass** der Mediaplayer des das Video wiedergebenden Endgeräts des Konsumenten dazu ausgebildet und/oder eingerichtet ist,
- die in die einzelnen Videoblöcke eines von ihm wiedergegebenen Videos eingebetteten MSFs an dem sie als solche kenntlich machenden Kennzeichen zu erkennen,
- die in einem jeweiligen MSF enthaltene Signatur zwischenzuspeichern,
- die Videoframes des Videoblocks, auf welche sich der jeweilige MSF bezieht, auf die Authentizität des Herausgebers und die Integrität der Videodaten zu validieren, nämlich zu diesen Videoframes durch Hashing mittels der auch in der Videosicherungseinrichtung des Herausgebers verwendeten Hashfunktion eine Hashinformation zu erzeugen und diese mit der in dem MSF in signierter Form übermittelten Hashinformation durch Verifikation der zwischengespeicherten Signatur mit dem öffentlichen Schlüssel des Herausgebers zu vergleichen sowie im Falle dessen, dass die Hashinformationen nicht identisch sind, die Wiedergabe des Videos zu stoppen und/oder eine auf eventuelle Probleme bezüglich der Authentizität des Herausgebers oder der Integrität der Videodaten hinweisende Warnmeldung auszugeben.
